# EUROPÄISCHE PATENTSCHRIFT

(11) **EP 2 663 689 B1**
(45) Veröffentlichungstag und Bekanntmachung des Hinweises auf die Patenterteilung: **05.11.2014**
(21) Anmeldenummer: 12700268.1
(22) Anmeldetag: 09.01.2012
(51) Int. Cl.: D21H 21/14, D21H 21/12, B01D 19/04

(54) **ÖL-IN-WASSER-EMULSIONEN**
OIL-IN-WATER EMULSIONS
ÉMULSIONS HUILE DANS L'EAU

(30) Priorität: 10.01.2011 US 201161431086 P; 10.01.2011 EP 11150500
(43) Veröffentlichungstag der Anmeldung: 20.11.2013
(73) Patentinhaber: BASF SE, 67056 Ludwigshafen (DE)
(72) Erfinder: GASCHLER, Wolfgang, 94559 Niederwinkling (DE)
(86) Internationale Anmeldenummer: PCT/EP2012/050252
(87) Internationale Veröffentlichungsnummer: WO 2012/095393

(56) Entgegenhaltungen:
- EP-A2- 0 149 812
- DE-A1- 4 127 719
- DE-A1- 19 835 968
- GB-A- 1 402 597

## Beschreibung

Die Erfindung betrifft ÖI-in-Wasser-Emulsionen auf Basis von Fettalkoholen und deren Verwendung als Entschäumer oder Entlüfter für wässrige Zusammensetzungen.

In zahlreichen industriellen Prozessen müssen wässrige Lösungen und Suspensionen gehandhabt werden, die aufgrund ihrer Inhaltsstoffe zur Schaumbildung neigen. Diese Schaumbildung erschwert die Prozessführung und muss daher möglichst gering gehalten oder gar vermieden werden. Beispiele für schaumbildende wässrige Zusammensetzungen sind Detergenzien enthaltende Zusammensetzungen, Saponin enthaltende Zusammensetzungen, Abwasser in Kläranlagen, Protein enthaltende Zusammensetzungen wie Sojabohnenextrakte und insbesondere Papierstoffsuspensionen, z. B. Holzschliff- und/oder Zellstoff-haltige Suspensionen, wie sie insbesondere in der Papierindustrie zur Herstellung von Papier, Pappe oder Karton eingesetzt werden.

Neben der Bildung von Schaum, welcher aus koaleszierenden Luftblasen permanent nachgebildet wird, erweist sich auch die in diesen Systemen eingeschlossene Luft, die in feindisperser, stabiler Form vorliegt, als problematisch. Die Verringerung des Luftgehaltes dieser Systeme ist daher ebenfalls von besonderer Bedeutung.

Aus diesen Gründen setzt man den schaumbildenden wässrigen Zusammensetzungen bei ihrer Verarbeitung und z. T. bereits bei ihrer Herstellung so genannte Entschäumer und/oder Entlüfter zu, die bereits bei geringen Einsatzkonzentrationen die unerwünschte Schaumbildung unterdrücken, den Gehalt eingeschlossener Luft verringern oder bereits entstandenen Schaum zerstören.

Bei den aus dem Stand der Technik bekannten Entschäumern handelt es sich häufig um wässrige Zusammensetzungen auf der Basis von Öl-in-Wasser-Dispersionen bzw. Emulsionen, deren Ölphase wenigstens eine hydrophobe Substanz, beispielsweise Mineralöle, Silikonöle, Polyalkylenoxide, deren Ester mit Fettsäuren und deren Ether mit langkettigen Alkoholen, native Fette und/oder Öle, Wachse, Esterwachse oder langkettige Alkohole enthält. Verschiedentlich wurde auch über die Verwendung von Destillationsrückständen, die bei der Herstellung von langkettigen Alkoholen nach dem Zieglerverfahren oder bei der Oxosynthese anfallen, berichtet (siehe z. B. EP-A 149812).

Aus der US 4,950,420 sind Entschäumer für die Papierindustrie bekannt, die 10 bis 90 Gew.-% eines oberflächenaktiven Polyethers, wie polyalkoxyliertes Glycerin oder polyalkoxylierten Sorbit, und 10 bis 90 Gew.-% eines Fettsäureesters von mehrwertigen Alkoholen, wie Mono- und Diester von Polyethylenglykol oder Polypropylenglykol, enthalten.

Die EP-A 531713 und WO 94/08091 beschreiben Entschäumer für die Papierindustrie auf Basis von Öl-in-Wasser-Emulsionen, deren Ölphasen Alkohole, Fettsäureester, Destillationsrückstände, Kohlenwasserstoffe in Kombination mit Polyglycerinestern enthalten.

Die DE 2157033 beschreibt Entschäumer auf Basis wässriger Emulsionen, die C₁₂-C₂₂-Alkanole und/oder C₁₂-C₂₂-Fettsäureester zwei- bis dreiwertiger Alkohole und Parafinöl bzw. C₁₂-C₂₂-Fettsäuren enthalten.

Joshi et al. stellen in Colloids and Surfaces A: Physicochem. Eng. Aspects 263 (2005) 239-249 fest, dass die Wirksamkeit eines Entschäumers auf Fettalkohol-Basis von seinem Aggregatzustand abhängt. Die Wirksamkeit ist am höchsten, wenn dieser teilweise geschmolzen ist. Daraus ergibt sich in der Fachwelt die Forderung Gemische von Fettsäurealkoholen einzusetzen, die als Gemische einen breiteren Schmelzbereich als Reinsubstanzen aufweisen.

Im Stand der Technik wird die Wirksamkeit eines Entschäumers häufig daran gemessen, wie hoch seine Fähigkeit ist, Schaumbildung an einer Flüssigkeitsoberfläche zu unterdrücken. Gerade in der Papierherstellung ist es aber auch von Bedeutung, den Luftgehalt in den bei der Papierherstellung anfallenden wässrigen Flüssigkeiten, vor allem in den Papierstoffsuspensionen, zu senken. Entschäumer, die ebenfalls in der Lage sind als Entlüfter zu wirken, werden im Stand der Technik seltener beschrieben. Die bekannten Entschäumer lassen bezüglich der entlüftenden Wirkung, insbesondere bei Temperaturen unterhalb 50 °C, z. B. im Bereich von 20 bis < 50 °C häufig zu wünschen übrig.

Die Aufgabe der vorliegenden Erfindung ist die Bereitstellung von Zusammensetzungen, die sowohl eine hohe Wirksamkeit als Entschäumer als auch als Entlüfter für wässrige Zusammensetzungen, insbesondere für wässrige Papierstoffsuspensionen, aufweisen.

Diese und weitere Aufgaben werden durch Öl-in-Wasser-Emulsionen gelöst, deren Ölphase zu wenigstens 95 Gew.-% aus den folgenden Bestandteilen besteht:
a) 50 bis 80 Gew.-%, insbesondere 55 bis 75 Gew.-% und speziell 60 bis 70 Gew.-%, bezogen auf das Gesamtgewicht der Ölphase, wenigstens eines Alkanols mit wenigstens 16 C-Atomen, insbesondere mit 16 bis 20 C-Atomen, wobei der Anteil an Alkanolen mit 16 bis 18 C-Atomen wenigstens 80 Gew.-%, insbesondere wenigstens 90 Gew%, speziell wenigstens 95 Gew.-% oder wenigstens 99 % bezogen auf die Gesamtmenge der Komponente A ausmacht,
b) 1 bis 10 Gew.-%, insbesondere 2 bis 8 Gew-%, speziell 3 bis 6 Gew-%, bezogen auf das Gesamtgewicht der Ölphase, wenigstens einer weiteren Komponente B, die unter Estern von C₁₂-C₃₆-Alkancarbonsäuren mit Polyglycerin und Estern von C₁₂-C₃₆-Alkancarbonsäuren mit C₁₂-C₃₆-Alkanolen sowie deren Gemischen ausgewählt ist,
c) 10 bis 49 Gew.-%, insbesondere 20 bis 40 Gew.-%, speziell 25 bis 35 Gew-%, bezogen auf das Gesamtgewicht der Ölphase, wenigstens einer weiteren Komponente C, welche ausgewählt ist unter organischen Substanzen, die bei 50 °C und 1013 mbar flüssig sind, bei Normaldruck einen Siedepunkt oberhalb 200 °C aufweisen sowie bei 25 °C und 1013 mbar eine Löslichkeit in Wasser von weniger als 0,1 g/l aufweisen.

Komponente A besteht vor allem aus im Wesentlichen unverzweigten Alkanolen mit wenigstens 16, insbesondere 16 bis 20 C-Atomen, d. h. gesättigten Alkoholen mit wenigstens 16, insbesondere 16 bis 20 C-Atomen, worin der Anteil an Alkoholen mit 16 bis 18 C-Atomen wenigstens 80 Gew.-%, insbesondere wenigstens 90 Gew%, speziell wenigstens 95 Gew.-% oder wenigstens 99 %, bezogen auf die Gesamtmenge der Komponente A, ausmacht und die zu wenigstens 80%, insbesondere wenigstens 90 % und speziell wenigstens 95 % linear sind. Derartige linearen Alkanole können durch die folgende Formel beschrieben werden:

H-(CH₂)ₙ-OH

worin n für eine ganze Zahl von wenigstens 16 und insbesondere im Bereich von 16 bis 20 steht. Der Anteil an Alkanolen, insbesondere linearen Alkanolen mit 16 bis 18 C-Atomen, insbesondere mit 16 oder 18 C-Atomen beträgt erfindungsgemäß wenigstens 80 Gew.-%, insbesondere wenigstens 90 Gew.-%, speziell wenigstens 95 Gew-% oder wenigstens 99 Gew.-%, bezogen auf das Gesamtgewicht der Komponente A. Beispiele für als Komponente A geeignete Alkohole sind Palmitylalkohol (Cetylalkohol), 1-Heptadecanol, Stearylalkohol, Arachinalkohol (n-Eicosanol), Behenalkohol und deren Gemische. Bevorzugt besteht die Komponente A zu wenigstens 80 %, insbesondere wenigstens 90 % und speziell wenigstens 95 % aus Palmitylalkohol, Stearylalkohol oder deren Gemischen.

Erfindungsgemäß enthält die Komponente A weniger als 20 Gew.-%, bezogen auf die Komponente A, Alkohole mit mehr als 18 Kohlenstoffatomen. Vorzugsweise enthält die Komponente A weniger als 10 Gew.-%, insbesondere weniger als 5 Gew.-%, speziell weniger als 1 Gew.-% oder weniger als 0,5 Gew.-%, bezogen auf die Komponente A, Alkohole mit mehr als 18 Kohlenstoffatomen.

In einer ebenso bevorzugten Ausführungsform wird als Komponente A Palmityl- oder Stearylalkohol oder ein Gemisch dieser Alkohole eingesetzt, während die Komponente A frei (weniger als 0,5 Gew.-% bezogen auf die Komponente A) von Alkoholen mit mehr als 18 Kohlenstoffatomen ist.

Der Anteil der Komponente A an der Ölphase liegt erfindungsgemäß bei 50 bis 80 Gew.-%, bevorzugt bei 55 bis 75 Gew.-%, insbesondere bei 60 bis 70 Gew.-% bezogen auf das Gesamtgewicht der Ölphase.

Die Komponente B ist unter Estern von Alkancarbonsäuren mit Polyglycerin, Estern von Alkancarbonsäuren mit Alkanolen und deren Mischungen ausgewählt.

Unter Estern von Alkancarbonsäuren mit Polyglycerin versteht man ein mit mindestens einer Fettsäure, die 12 bis 36, insbesondere 16 bis 30, speziell 18 bis 24 C-Atome aufweist, verestertes Polyglycerin. Bei den für die Veresterung des Polyglycerins in Betracht kommenden Fettsäuren kann es sich sowohl um gesättigte Fettsäuren als auch um ungesättigte Fettsäuren und deren Gemische handeln. Für die Veresterung der Polyglycerinmischungen geeignete Fettsäuren sind vorzugsweise unter gesättigten Fettsäuren mit 12 bis 36, insbesondere 16 bis 30, speziell 18 bis 24 C-Atome ausgewählt. Beispiele für geeignete gesättigte Fettsäuren sind Laurinsäure, Myristinsäure, Palmitinsäure, Stearinsäure, Arachinsäure, Behensäure und Montanwachssäure. Beispiele für geeignete ungesättigte Fettsäuren sind Ölsäure, Hexadecensäuren, Elaidinsäure, Eicosensäuren und Docosensäuren wie Erucasäure oder Brassidinsäure sowie mehrfach ungesättigte Säuren, wie Octadecendiensäuren und Octatriensäuren, wie Linolsäure und Linolensäure sowie Mischungen der genannten gesättigten und ungesättigten Carbonsäuren. Bevorzugt ist das Polyglycerin mit gesättigten Carbonsäuren mit 18 bis 24 C-Atomen verestert, die insbesondere unter Palmitinsäure, Stearinsäure und Behensäure und deren Gemischen ausgewählt sind. In einer speziellen Ausführungsform handelt es sich bei dem Polyglycerinester um ein mit Behensäure verestertes Polyglycerin.

Der Veresterungsgrad der Polyglycerinester beträgt in der Regel 20 bis 100 %, vorzugsweise 60 bis 100 %, bezogen auf die Anzahl an Hydroxylfunktionen im Polyglycerin.

Bevorzugte Polyglycerinester sind insbesondere solche, die durch Veresterung von Polyglycerinmischungen erhältlich sind, welche 15 bis 40 Gew.-% Diglycerin, 30 bis 55 Gew.-% Triglycerin und 10 bis 25 Gew.-% Tetraglycerin, jeweils bezogen auf die Gesamtmenge des Polyglycerins, enthalten, wobei die Gesamtmenge an Di-, Tri- und Tetraglycerin wenigstens 60 Gew.-%, insbesondere wenigstens 80 Gew.-% ausmacht. Insbesondere werden zur Veresterung Gemische der folgenden Zusammensetzung eingesetzt:
0 bis 10 Gew.-% Glycerin,
15 bis 40 Gew.-% Diglycerin,
30 bis 55 Gew.-% Triglycerin,
10 bis 25 Gew.-% Tetraglycerin,
0 bis 15 Gew.-% Pentaglycerin,
0 bis 10 Gew.-% Hexaglycerin und
0 bis 5 Gew.-% höherkondensierten Polyglycerinen.

Insbesondere handelt es sich bei den Polyglycerinestern um solche, die durch Veresterung eines der vorstehend beschriebenen Polyglycerinmischungen mit wenigstens einer gesättigten Carbonsäure mit 18 bis 24 C-Atomen erhältlich sind, wobei die Carbonsäure insbesondere unter Palmitinsäure, Stearinsäure und Behensäure und deren Gemischen ausgewählt ist.

In den erfindungsgemäßen Zusammensetzungen sind solche Polyglycerinester besonders bevorzugten, die durch Veresterung von Behensäure mit einer Polyglycerinmischung erhältlich sind, welche aus 0 bis 10 Gew.-% Glycerin, 15 bis 40 Gew.-% Diglycerin, 30 bis 55 Gew.-% Triglycerin, 10 bis 25 Gew.-% Tetraglycerin, 0 bis 15 Gew.-% Pentaglycerin, 0 bis 10 Gew.-% Hexaglycerin und 0 bis 5 Gew.-% höherkondensierten Polyglycerinen besteht.

Die zur Veresterung eingesetzten Polyglycerinmischungen sind beispielsweise durch alkalisch katalysierte Kondensation von Glycerin bei erhöhten Temperaturen (vgl. z. B. Fette, Seifen, Anstrichmittel, 88. Jahrgang, Nr. 3, Seiten 101 bis 106 (1986)) oder gemäß der DE-A 3842692 durch Umsetzung von Glycerin mit Epichlorhydrin in Gegenwart von sauren Katalysatoren bei erhöhten Temperaturen zugänglich. Die Mischungen sind aber auch dadurch erhältlich, dass man die reinen Polyglycerinkomponenten, z. B. Diglycerin, Triglycerin und Tetraglycerin miteinander mischt.

Die mit Alkancarbonsäuren veresterten Polyglycerine sind bekannt, z. B. aus EP 531713 und WO 94/08091. Sie werden typischerweise durch Verestern von Polyglycerin, insbesondere durch Verestern der zuvor beschriebenen Polyglycerinmischungen, mit der gewünschten Fettsäure oder Mischung von Fettsäuren oder deren esterbildenden Derivaten, z. B. deren C₁-C₄-Alkylester, nach an sich bekannten Verfahren hergestellt. Hierbei arbeitet man in der Regel in Gegenwart eines sauren Veresterungskatalysators wie Schwefelsäure, p-Toluolsulfonsäure, Zitronensäure, phosphoriger Säure, Phosphorsäure, hypophosphoriger Säure oder basischer Katalysatoren, wie Natriummethylat oder Kalium-tert.-butylat.

Als Komponente B kommen weiterhin Ester von C₁₂-C₃₆-Alkancarbonsäuren mit C₁₂-C₃₆-Alkanolen in Betracht. Darunter versteht man Substanzen, die durch Veresterung von wenigstens einer, vorzugsweise gesättigten, ein- bis zweiwertigen, vorzugsweise einwertigen, Alkancarbonsäure mit 12 bis 36, insbesondere 16 bis 30, speziell 18 bis 24 C-Atomen mit einem C₁₂-C₃₆-Alkanol erhältlich sind. Die zur Veresterung geeigneten Alkanole sind bevorzugt gesättigt, linear und ein- bis zweiwertig, insbesondere einwertig. Sie weisen 12 bis 36, insbesondere 16 bis 30, speziell 18 bis 24 C-Atome auf. Es können auch Mischungen von Alkansäurealkylestern eingesetzt werden. Geeignete Beispiele für Alkansäurealkylester sind Palmitinsäurepalmitylester, Stearinsäurestearylester, Arachinsäurearachylester, Behensäurebehenylester und Lignocerinsäurelignocerylester. Bevorzugte Ester von C₁₂-C₃₆-Alkancarbonsäuren mit C₁₂-C₃₆-Alkanolen sind Behensäurebehenylester und Stearinsäurestearylester und deren Gemische.

In einer bevorzugten Ausführungsform umfasst die Komponente B wenigstens einen der zuvor beschriebenen Ester von Alkancarbonsäuren mit Polyglycerin (im Folgenden auch als Polyglycerinester bezeichnet), insbesondere wenigstens einen der als bevorzugt oder besonders bevorzugt angegebenen Polyglycerinester. In einer bevorzugten Ausführungsform umfasst die Komponente B wenigstens einen der zuvor beschriebenen Polyglycerinester, der durch Veresterung des zuvor beschriebenen Polyglycerins mit wenigstens einer gesättigten Carbonsäure mit 18 bis 24 C-Atomen erhältlich ist, wobei die Carbonsäure insbesondere unter Palmitinsäure, Stearinsäure und Behensäure und deren Gemischen ausgewählt ist. In einer besonders bevorzugten Ausführungsform umfasst die Komponente B wenigstens einen der zuvor beschriebenen Polyglycerinester, der durch Veresterung von Behensäure mit einer Polyglycerinmischung bestehend aus 0 bis 10 Gew.-% Glycerin, 15 bis 40 Gew.-% Diglycerin, 30 bis 55 Gew.-% Triglycerin, 10 bis 25 Gew.-% Tetraglycerin, 0 bis 15 Gew.-% Pentaglycerin, 0 bis 10 Gew.-% Hexaglycerin und 0 bis 5 Gew.-% höherkondensierten Polyglycerinen erhältlich ist.

In einer bevorzugten Ausführungsform besteht die Komponente B zu wenigstens 80 Gew.-%, insbesondere zu wenigstens 90 Gew.-%, speziell zu wenigstens 95 Gew.-%, bezogen auf das Gesamtgewicht der Komponente B, oder ausschließlich aus wenigstens einem der zuvor beschriebenen Polyglycerinester, insbesondere wenigstens einem der als bevorzugt oder besonders bevorzugt angegebenen Polyglycerinester. In einer besonders bevorzugten Ausführungsform besteht die Komponente B zu wenigstens 80 Gew.-%, insbesondere zu wenigstens 90 Gew.-%, speziell zu wenigstens 95 Gew.-%, bezogen auf das Gesamtgewicht der Komponente B, oder ausschließlich aus wenigstens einem der zuvor beschriebenen Polyglycerinester, der durch Veresterung des zuvor beschriebenen Polyglycerins mit wenigstens einer gesättigten Carbonsäure mit 18 bis 24 C-Atomen erhältlich ist, wobei die Carbonsäure insbesondere unter Palmitinsäure, Stearinsäure und Behensäure und deren Gemischen ausgewählt ist. In einer besonders bevorzugten Ausführungsform besteht die Komponente B zu wenigstens 80 Gew.-%, insbesondere zu wenigstens 90 Gew.-%, speziell zu wenigstens 95 Gew.-%, bezogen auf das Gesamtgewicht der Komponente B, oder ausschließlich aus wenigstens einem der zuvor beschriebenen Polyglycerinester, der durch Veresterung von Behensäure mit einer Polyglycerinmischung bestehend aus 0 bis 10 Gew.-% Glycerin, 15 bis 40 Gew.-% Diglycerin, 30 bis 55 Gew.-% Triglycerin, 10 bis 25 Gew.-% Tetraglycerin, 0 bis 15 Gew.-% Pentaglycerin, 0 bis 10 Gew.-% Hexaglycerin und 0 bis 5 Gew.-% höherkondensierten Polyglycerinen erhältlich ist.

Der Anteil der Komponente B an der Ölphase liegt erfindungsgemäß bei 1 bis 10 Gew.-%, bevorzugt bei 2 bis 8 Gew.-%, insbesondere bei 3 bis 6 Gew.-%, bezogen auf das Gesamtgewicht der Ölphase.

Bei der in den erfindungsgemäßen Öl-in-Wasser-Emulsionen enthaltenen Komponente C handelt es sich um eine oder mehrere organische Substanzen, die bei 50 °C und 1013 mbar flüssig sind, bei Normaldruck einen Siedepunkt oberhalb 200 °C, z. B. im Bereich von 200 bis 400 °C, insbesondere von wenigstens 250 °C, aufweisen und die bei 25 °C und 1013 mbar in Wasser im Wesentlichen unlöslich sind, d. h. eine Löslichkeit in Wasser von weniger als 0,1 g/l aufweisen. Geeignete Substanzen sind Kohlenwasserstoffe und Triglyceride von Fettsäuren, insbesondere solchen mit 12 bis 22 Kohlenstoffatomen. Die Komponente C besteht vorzugsweise zu wenigstens 80 Gew.-%, insbesondere 90 Gew.-%, speziell 95 Gew.-%, bezogen auf das Gesamtgewicht der Komponente C, aus einem oder mehreren Kohlenwasserstoffen, welche insbesondere nichtaromatisch, d. h. aliphatisch oder cycloaliphatisch, sind und einen Siedepunkt von wenigstens 200 °C, bevorzugt wenigstens 250 °C, z. B. im Bereich von 200 bis 400 °C oder 250 bis 400 °C bei 1,013 bar aufweisen, wie beispielsweise Flüssigparaffine, Weißöle, Weichparaffine oder sonstige handelsübliche Mineralöle.

Der Anteil der Komponente C an der Ölphase liegt erfindungsgemäß bei 10 bis 49 Gew.-%, bevorzugt 20 bis 40, insbesondere 25 bis 35 Gew.-%, bezogen auf das Gesamtgewicht der Ölphase.

Zur Stabilisierung der Ölphase in der wässrigen Emulsion enthalten die erfindungsgemäßen Emulsionen vorteilhafterweise wenigstens eine oberflächenaktive Substanz. Die erfindungsgemäßen Emulsionen enthalten die wenigstens eine oberflächenaktive Substanz in der Regel in einer Menge von 0,1 bis 10 Gew.-% insbesondere in einer Menge von 0,5 bis 5 Gew.-%, bezogen auf die Ölphase.

Als oberflächenaktive Substanzen sind grundsätzlich alle zur Stabilisierung von hydrophoben Teilchen oder Tröpfchen in wässrigen Systemen bekannten Substanzen geeignet, z. B. anionische, kationische, amphotere und/oder nichtionische Emulgatoren sowie wasserlösliche ionische und nichtionische Polymere, vorzugsweise ionisch amphiphile Copolymere, die kationische oder anionische Gruppen aufweisen und deren Molekulargewicht im Unterschied zu den Emulgatoren in der Regel oberhalb 1000 Dalton liegt. Oberflächenaktive Substanzen sind dem Fachmann hinreichend bekannt, z. B. aus Ullmanns Encyclopedia of Industrial Chemistry, 5 ed. Vol. A9, S. 297-339. Beispiele für geeignete anionische Emulgatoren sind:
Salze, insbesondere Natrium- und Ammoniumsalze höherer Fettsäuren,
   Salze, insbesondere die Natrium- und Ammoniumsalze sulfatierter
   Ethoxylierungsprodukte von C₆-C₂₂-Alkylphenolen wie Nonylphenol oder Octylphenol,
   Salze, insbesondere die Natrium- und Ammoniumsalze von C₄-C₂₂-Alkylarylsulfonaten,
   Salze, insbesondere die Natrium- und Ammoniumsalze von Sulfonaten des Naphthalins,
   Salze, insbesondere die Natrium- und Ammoniumsalze von sulfonierten C₈-C₂₂-Alkyldiphenyloxiden, insbesondere von bis-sulfonierten C₈-C₂₂-Alkyldiphenyloxiden wie bis-sulfoniertes Dodecyldiphenyloxid,
   Salze, insbesondere die Natrium- und Ammoniumsalze von Naphthalinsulfonsäure-Formaldehyd-Kondensaten oder Naphthalinsulfonsäure-Formaldehyd-Harnstoffkondensaten,
sowie Salze, insbesondere die Natrium- und Ammoniumsalze von Di-C₄-C₂₀-Alkyl-Sulfosuccinaten;
Beispiele für geeignete nichtionische Emulgatoren sind:
alkoxylierte C₆-C₂₂-Alkylphenole mit einem Ethoxylierungsgrad von vorzugsweise im Bereich von 5 bis 50,
ethoxylierte ungesättigte Öle wie Reaktionsprodukte von Ricinusöl mit 30 bis 40 Moläquivalenten Ethylenoxid, und
Anlagerungsprodukte von Ethylenoxid und/oder Propylenoxid an aliphatische Alkohole mit in der Regel 12 bis 20 C-Atomen, z. B. an Fettalkohole, an mehrwertige Alkohole, an Amine sowie an Carbonsäuren.

Die erfindungsgemäßen Emulsionen enthalten vorzugsweise wenigstens einen Emulgator, insbesondere wenigstens einen anionischen Emulgator in einer Menge von 0,1 bis 10 Gew.-% insbesondere in einer Menge von 0,5 bis 5 Gew.-%, bezogen auf die Ölphase. In einer speziellen Ausführungsform enthalten die erfindungsgemäßen Emulsionen wenigstens einen unter den Salzen, insbesondere den Natrium- und Ammoniumsalzen, sulfatierter Ethoxylierungsprodukte von C₆-C₂₂-Alkylphenolen ausgewählten anionischen Emulgator.

Beispiele für oberflächenaktive anionische Polymerisate sind Homopolymerisate der Acrylsäure, Homopolymerisate der Methacrylsäure, Copolymerisate aus Acrylsäure und Methacrylsäure in jedem beliebigen Molverhältnis, Copolymerisate aus Acrylsäure und Maleinsäure in jedem beliebigen Molverhältnis, Copolymerisate aus Methacrylsäure und Maleinsäure, Polyvinylsulfonsäure, Polyacrylamido-2-methyl-propansulfonsäure, Styrolsulfonsäure, Copolymerisate aus Acrylsäure und Acrylamid oder Methacrylamid, Copolymerisate aus Methacrylsäure und Acrylamid oder Methacrylamid, oder die Alkalimetall- und Ammoniumsalze der genannten Polymeren mit Molmassen von beispielsweise 1500 bis 300 000.

Bevorzugte anionische oberflächenaktive Polymere sind amphiphile, Säuregruppen enthaltende Copolymerisate, die
(a) hydrophobe monoethylenisch ungesättigte Monomere und
(b) monoethylenisch ungesättigte Carbonsäuren, monoethylenisch ungesättigte Sulfonsäuren, monoethylenisch ungesättigte Phosphonsäuren oder deren Mischungen,
sowie gegebenenfalls davon verschiedene Monomere (c) einpolymerisiert enthalten, sowie die Salze, insbesondere die Natrium- und die Ammoniumsalze derartiger Copolymerisate.

Beispiele für hydrophobe monoethylenisch ungesättigte Monomere sind: Styrol, Methylstyrol, Ethylstyrol, Acrylnitril, Methacrylnitril, C₂- bis C₁₈-Olefine, Ester aus monoethylenisch ungesättigten C₃- bis C₅-Carbonsäuren und einwertigen Alkoholen, Vinylalkylether, Vinylester oder deren Mischungen. Aus dieser Gruppe von Monomeren verwendet man vorzugsweise Isobuten, Diisobuten, Styrol und Acrylsäureester wie Ethylacrylat, Isopropylacrylat, n-Butylacrylat und sec.-Butylacrylat.

Beispiele für Monomere (b) sind: Acrylsäure, Methacrylsäure, Maleinsäure, Maleinsäureanhydrid, Fumarsäure, Itaconsäure, Vinylsulfonsäure, 2-Acrylamidomethylpropansulfonsäure, Acrylamido-propan-3-sulfonsäure, 3-Sulfopropylacrylat, 3-Sulfopropylmethacrylat, Styrolsulfonsäure, Vinylphosphonsäure oder deren Mischungen, wobei Acrylsäure, Methacrylsäure und Maleinsäure sowie ihr Anhydrid bevorzugt sind.

Die Molmasse der amphiphilen Copolymerisate beträgt in der Regel 1000 bis 100 000 und liegt vorzugsweise in dem Bereich von 1500 bis 10 000. Die Säurezahlen der anionischen amphiphilen Copolymerisate betragen in der Regel 50 bis 500, vorzugsweise 150 bis 350 mg KOH/g Polymer.

Als oberflächenaktive Polymere zur Stabilisierung der erfindungsgemäßen Zusammensetzungen kommen außerdem in Betracht:
- Pfropfpolymerisate von 5 bis 40 Gew.-Teilen N-Vinylformamid auf 100 Gew.-Teilen eines Polyalkylenglykols mit einer Molmasse von 500 bis 10 000,
- zwitterionische Polyalkylenpolyamine,
- zwitterionische Polyethylenimine,
- zwitterionische Polyetherpolyamine oder
- zwitterionische vernetzte Polyalkylenpolyamine.

Pfropfpolymerisate von N-Vinylformamid auf Polyalkylenglykolen werden beispielsweise in der WO-A-96/34903 beschrieben. Die aufgepfropften Vinylformamideinheiten können gegebenenfalls bis zu 10 % hydrolysiert sein. Der Anteil an aufgepfropften Vinylformamideinheiten beträgt vorzugsweise 20 bis 40 Gew.-%, bezogen auf Polyalkylenglykol. Vorzugsweise verwendet man Polyethylenglykole mit Molmassen von 2000 bis 10 000.

Zwitterionische Polyalkylenpolyamine und zwitterionische Polyethylenimine sind beispielsweise aus der EP-B 112592 bekannt. Solche Verbindungen sind beispielsweise dadurch erhältlich, dass man ein Polyalkylenpolyamin oder Polyethylenimin zunächst alkoxyliert, z. B. mit Ethylenoxid, Propylenoxid und/oder Butylenoxid und die Alkoxylierungsprodukte anschließend quaternisiert, z. B. mit Methylbromid oder Dimethylsulfat, und die quaternierten, alkoxylierten Produkte dann mit Chlorsulfonsäure oder Schwefeltrioxid sulfatiert. Die Molmasse der zwitterionischen Polyalkylenpolyamine beträgt beispielsweise 1000 bis 9000 vorzugsweise 1500 bis 7500. Die zwitterionischen Polyethylenimine haben vorzugsweise Molmassen im Bereich von 2000 bis 1700 Dalton.

Vorzugsweise enthalten die erfindungsgemäßen Zusammensetzungen wenigstens eine anionische oberflächenaktive Substanz. Diese ist vorzugsweise ausgewählt unter den vorstehend genannten anionischen Emulgatoren, den vorstehend genannten Säuregruppen-tragenden, wasserlöslichen Polymeren und deren Mischungen.

Für die Stabilität der erfindungsgemäßen Emulsionen hat es sich als vorteilhaft erwiesen, wenn sie 0,05 bis 8 Gew.-%, insbesondere 0,1 bis 5 Gew.-%, bezogen auf die Ölphase, wenigstens eines Säuregruppen-aufweisenden, wasserlöslichen Homo- oder Copolymerisats, vorzugsweise eines Salzes davon, und gegebenenfalls wenigstens einen anionischen Emulgator enthalten. Die Emulgatoren werden bevorzugt ebenfalls in einer Menge von 0,05 bis 5 Gew.-%, bezogen auf das Gesamtgewicht der Ölphase eingesetzt. Vorteilhaft sind insbesondere solche Emulsionen, die wenigstens einen anionischen Emulgator und wenigstens eines der vorstehend genannten Säuregruppen-tragenden, wasserlöslichen Polymere enthalten.

Die erfindungsgemäßen Emulsionen können neben der Ölphase als weiteren dispersen Bestandteil feinteilige, praktisch wasserunlösliche, inerte Feststoffe mit Teilchengrößen (gewichtsmittlerer Teilchendurchmesser) unterhalb 20 µm, vorzugsweise im Bereich von 0,1 bis 10 µm enthalten. Sofern erwünscht, enthält die erfindungsgemäße Emulsion diese weiteren interten Feststoffe in einer Menge von beispielsweise 0,1 bis 50 Gew.-%, vorzugsweise 1 bis 35 Gew.-%, bezogen auf das Gewicht der Ölphase der Öl-in-Wasser-Emulsionen. Geeignete inerte Feststoffe sind vor allem anorganische Feststoffe wie z. B. Kaolin, Kreide, Bentonit, Talkum, Bariumsulfat, Siliziumdioxid, Zeolithe, aber auch organische Feststoffe wie Harnstoff-Formaldehyd-Pigmente, Melamin-Formaldehyd-Pigmente und mikrokristalline Cellulose, wobei die inerten anorganischen Feststoffe auch hydrophobiert sein können, z. B. durch Behandlung mit Trialkylsilylhalogeniden. Im Unterschied zu der Ölphase sind diese interten Feststoffe bei einer Temperatur von 100°C fest. In einer bevorzugten Ausführungsform der Erfindung enthalten die Emulsionen keine von den Komponenten A, B und C verschiedenen feinteiligen, praktisch wasserunlöslichen, inerten Feststoffe.

Der Feststoffgehalt der erfindungsgemäßen Öl-in-Wasser-Emulsion liegt in der Regel in einem Bereich von 10 bis 50 Gew.-%, insbesondere 15 bis 45 Gew.-%, speziell 20 bis 40 Gew.-%, bezogen auf das Gesamtgewicht der Öl-in-Wasser-Emulsion.

Häufig enthalten die erfindungsgemäßen Emulsionen zur Einstellung der für die jeweilige Anwendung erforderlichen Viskosität einen oder mehrere Verdicker. Grundsätzlich sind alle zur Verdickung von Öl-in-Wasser-Systemen bekannten Verdicker einsetzbar. Hierzu zählen natürliche Verdicker wie Polysaccharide, Carragenate, Tragant, Alginate, Stärke, Caseinate, modifizierte organische Polymere wie Carboxymethylcellulose, synthetische Verdicker wie Polyacrylsäuren, Polyvinylalkohol, Polyethylenglycole, Polyacrylamide sowie insbesondere Copolymere des Acrylamids mit ethylenisch ungesättigten Carbonsäuren, insbesondere mit Acrylsäure, und gegebenenfalls mit Comonomeren. Diese Verdicker sind in der EP-A 149 812 beschrieben, auf deren Offenbarung hiermit Bezug genommen wird. Weitere geeignete Verdicker sind in dem Übersichtsartikel von Warren. B. Shapiro, Oil-in Water-Emulsions, Cosmetics & Toiletries, Vol. 97, 1982, 27-33 genannt. Besonders bevorzugt sind auch sogenannte Assoziativverdicker, z. B. hydrophob modifizierte Polyurethane, hydrophob modifizierte Celluloseether, die nach dem Prinzip der hydrophoben Wechselwirkung in wässriger Phase hochmolekulare Netzwerkstrukturen aufbauen. Assoziativverdicker sind dem Fachmann bekannt, z. B. aus J. Bielemann, Additives for Coatings, Wiley-VCH Weinheim 2000 und im Handel erhältlich, z. B. unter den Bezeichnungen RHOPLEX^{®} und PRIMAL^{®} TT 935 der Fa. Rohm & Haas, USA. In einer bevorzugten Ausführungsform der Erfindung enthalten die Emulsionen keinen Verdicker.

Ferner enthalten die erfindungsgemäßen Emulsionen häufig zur Haltbarmachung noch handelsübliche Biozide, z. B. Formaldehyd, Isothiazolinon-Verbindungen wie die von der Arch Chemicals unter der Bezeichnung PROXEL^{®} vertriebenen Produkte und die von Thor Chemie GmbH unter der Bezeichnung ACTICIDE^{®} vertriebenen Produkte,

Zur Herstellung der erfindungsgemäßen Emulsion wird in der Regel die Ölphase in der wässrigen Phase emulgiert. Hierzu wird man in der Regel eine Schmelze der Komponenten A, B und C der Ölphase in eine wässrige Phase, die gegebenenfalls ein oder mehrere oberflächenaktive Substanzen enthält, einarbeiten, d. h. emulgieren. Das Einarbeiten bzw. Emulgieren erfolgt in der Regel bei Temperaturen oberhalb des Schmelzpunktes der Ölphase, z. B. bei Temperaturen im Bereich von 55 bis 100 °C. Das Einarbeiten geschieht in an sich bekannter Weise zur Herstellung von Emulsionen, indem man Vorrichtungen wie z. B. Dispergatoren verwendet, in denen die Komponenten der Emulsion einem starken Schergefälle unterworfen werden. Um besonders stabile Öl-in-Wasser-Emulsionen zu erhalten, führt man die Emulgierung der Ölphase in der wässrigen Phase vorzugsweise in Gegenwart von oberflächenaktiven Stoffen durch.

Durch das Emulgieren der Ölphase in der wässrigen Phase erhält man Öl-in-Wasser-Emulsionen. Diese weisen in der Regel unmittelbar nach der Herstellung eine Viskosität in dem Bereich von 300 bis 3000 mPa·s auf (bestimmt nach Brookfield bei 25 °C, z. B. mit Spindel 4 bei 20 Umdrehungen pro Minute).

Die mittlere Teilchengröße (Gewichtsmittel des Tröpfchendurchmessers) der Öl-in-Wasser-Emulsion liegt in der Regel unterhalb 25 µm, vorzugsweise in dem Bereich von 0,1 bis 15 µm, insbesondere 0,5 bis 10 µm, bestimmt mittels Lichtstreuung bei 20 °C.

Die erfindungsgemäßen Öl-in-Wasser-Emulsionen können als Entschäumer und/oder Entlüfter zur Schaumbekämpfung bzw. Entlüftung von wässrigen Medien beispielsweise in der Nahrungsmittelindustrie, der Stärkeindustrie, in Kläranlagen oder in der Papierindustrie eingesetzt werden. Bevorzugt ist ihre Verwendung als Bohrlochlösung und in der Papierindustrie, insbesondere bei der Zellstoffkochung, der Zellstoffwäsche, der Mahlung von Papierstoff, der Papierherstellung und der Dispergierung von Pigmenten für die Papierherstellung. Speziell werden die erfindungsgemäßen ÖI-in-Wasser-Emulsionen in der Papierindustrie als Entlüfter von Papierstoffsuspensionen eingesetzt. Besonders bevorzugt ist dabei der Einsatz als Entlüfter des Stoffauflaufs in der Papierherstellung.

Als Entschäumer oder Entlüfter werden die Öl-in-Wasser-Emulsionen in der Regel in Mengen von 0,01 bis 2 Gew.-Teilen pro 100 Gew.-Teile der schaumbildenden wässrigen Flüssigkeit, bevorzugt in Mengen von 0,02 bis 1 Gew.-Teilen pro 100 Gew.-Teile der schaumbildenden Flüssigkeit, insbesondere in Mengen von 0,05 bis 0,5 Gew.-Teilen pro 100 Gew.-Teile der schaumbildenden Flüssigkeit eingesetzt.

Die Vorteile der erfindungsgemäßen Emulsionen kommen insbesondere bei Temperaturen im Bereich von 20 bis 50 °C zum Tragen.

Die nachfolgenden Beispiele sollen die Erfindung weiter erläutern und sind nicht einschränkend zu verstehen.

### Physikochemische Untersuchungsmethoden

Der mittlere Teilchengröße (gewichtsmittlerer Teilchendurchmesser d₅₀) der in Wasser emulgierten Teilchen der Ölphase wurde mit Hilfe eines Coulter-Counters der Firma Beckmann bestimmt.

Die Viskosität wurde mit einem Rotationsviskosimeter Brookfield Typ RVT, Spindel 4 bei 20 Umdrehungen pro Minute bei 25 °C bestimmt.

Der Feststoffgehalt wurde durch Rückwägung der Proben nach Lagerung in einem Trockenschrank bei 110 °C bis zur Gewichtskonstanz bestimmt.

Der durchschnittliche Luftgehalt wurde bestimmt, indem in einem Behälter aus einem durchsichtigen Kunststoff jeweils 10 I einer schaumentwickelnden Papierstoffsuspension 0,1 % (Holzschliff) 5 Minuten gepumpt wurden. Die in der Stoffsuspension gebildete Luftmenge wurde dann mit Hilfe eines Luftmessgerätes (z. B. auf Basis von Impedanz-Verfahren wie beim Sonica Gerät der Firma Conrex oder auf Basis von Schallgeschwindigkeitsmessungen wie beim Sonatrac der Firma Cidra) erfasst. Zur Beurteilung der Wirksamkeit eines Entlüfters wurde der durchschnittliche Luftgehalt 5 Minuten nach der Zugabe des Entlüfters angegeben.

Pumpt man die Papiersuspension in Abwesenheit eines Entschäumers 5 Minuten um, so erhält man einen durchschnittlichen Luftgehalt von 4 Vol.-%. Durch die Zugabe von jeweils 5 mg/l eins wirksamen Entlüfters zu der Papierstoffsuspension wird dieser Wert deutlich reduziert, so dass er ein Maß für die Wirksamkeit eines Entlüfters darstellt.

Die Temperatur der Papierstoffsuspension betrug je nach Prüfung 30 oder 40 °C, wobei die Temperatur während der 5-minütigen Prüfung auf+/- 1 °C konstant gehalten wurde. In dieser Terminologie ist der Entschäumer umso wirksamer, je kleiner der durchschnittliche Luftgehalt der Papierstoffsuspension ist.

Bei den in den Beispielen angegebenen Teilen handelt es sich um Gew.-Teile.

Der im Folgenden als Komponente A verwendete C_{16/18}-Fettalkohol besteht zu 32 Gew.-% aus einem linearen C₁₆-Alkohol, zu 67 Gew.-% aus einem linearen C₁₈-Alkohol und zu 1 Gew.-% aus einem linearen C₂₀-Alkohol. Der Schmelzbereich dieser Mischung liegt bei 51 bis 52 °C.

Der in den Vergleichsbeispielen als Komponente A eingesetzte C₂₀₊-Alkohol bestand aus 3 Gew.-% eines linearen C₁₈-Alkohols, 45 Gew.-% eines linearen C₂₀-Alkohols, 25 Gew.-% eines linearen C₂₂-Alkohols, 15 Gew.-% eines linearen C₂₄-Alkohols und 12 Gew.-% höherer Alkohole. Der Schmelzbereich dieser Mischung lag bei 45 °C bis 54 °C.

Der als Komponente B verwendete Polyglycerinester wurde durch Veresterung eines Polyglyceringemisches bestehend aus 27 % Diglycerin, 44 % Triglycerin, 19 % Tetraglycerin und 10 % höher kondensierten Polyglycerinen mit Behensäure hergestellt. Der Veresterungsgrad betrug 60 %.

Der als Komponente C verwendete Kohlenwasserstoff (Paraffin) weist einen Schmelzpunkt von 38 °C auf.

Als oberflächenaktive Substanzen dienten:
Natriumsalz des Schwefelsäurehalbesters von mit 25 Mol/Mol Ethylenoxid ethoxyliertes Isooctylphenol als anionischer Emulgator;
Anionisches Copolymer aus 70 Gew.-% Acrylamid und 30 Gew.-% Acrylsäure mit einem K-Wert von 270.

### Beispiel 1

Die Komponenten der Ölphase wurden zunächst bis auf eine Temperatur von 110 °C erhitzt und dann mittels eines Dispergators in die auf 80 °C erwärmte wässrige Phase eingearbeitet.

Die Ölphase wies, bezogen auf das Gesamtgewicht der Emulsion die folgende Zusammensetzung auf:
- 20 Teile des C_{16/18}-Fettalkohols,
- 9 Teile Paraffin und
- 1 Teil Polyglycerinesters.

Die Wasserphase bestand, bezogen auf das Gesamtgewicht der Emulsion aus:
- 68,3 Teile Wasser,
- 1 Teil des anionischen Emulgators,
- 0,5 Teile des anionischen Copolymerisats und
- 0,2 Teile Natronlauge.

Die physikalischen Eigenschaften und die entlüftende Wirkung dieser Emulsion sind in Tabelle 2 angegeben.

Die in Tabelle 1 angegebenen Beispiele und Vergleichsbeispiele wurden in analoger Weise hergestellt. Die Mengenangaben sind Gew.-%, bezogen auf das Gesamtgewicht der Emulsion. Die Zusammensetzung der Wasserphase entsprach in allen Beispielen der Wasserphase des Beispiels 1. Die physikalischen Eigenschaften und die die entlüftende Wirkung dieser Emulsion sind in Tabelle 2 angegeben.

**Tabelle 1:**

| Beispiel | 1 | 2 | 3 | 4 | 5 | V1 | V2 | V3 | V4 |
|---|---|---|---|---|---|---|---|---|---|
| Komponente | | | | | | | | | |
| C_{16/18}-Fettalkohol | 20 | 20 | 20 | 20 | 17,5 | 20 | 20 | 10 | 10 |
| C₂₀₊-Alkohol | -- | -- | -- | -- | 2,5 | -- | -- | 10 | 5 |
| Polyglycerinester | 1 | -- | 1 | -- | 1 | -- | -- | 1 | 1 |
| Behenylbehenat | -- | 3 | -- | 3 | -- | -- | -- | -- | -- |
| Paraffin | 9 | 7 | -- | -- | 9 | -- | 10 | 9 | 9 |
| Palmöl | -- | -- | 9 | 7 | -- | 10 | -- | -- | -- |

**Tabelle 2: physikalische Eigenschaften und entlüftende Wirkung der Entschäumer**

| | mittlere Teilchengröße [µm] | Viskosität [mPa·s] | Feststoffgehalt [%] | Luftgehalt [%] | |
|---|---|---|---|---|---|
| | | | | 30 °C | 40 °C |
| 1 | 2,1 | 420 | 29,8 | 0,1 | 0,1 |
| 2 | 2,2 | 470 | 29,9 | 0,1 | 0,1 |
| 3 | 2,1 | 450 | 29,7 | 0,2 | 0,2 |
| 4 | 2,0 | 490 | 29,8 | 0,2 | 0,2 |
| 5 | 2,3 | 440 | 29,9 | 0,3 | 0,2 |
| V1 | 2,2 | 390 | 29,7 | 0,8 | 1,0 |
| V2 | 2,2 | 420 | 29,8 | 1,0 | 1,2 |
| V3 | 2,6 | 360 | 29,8 | 0,5 | 0,4 |
| V4 | 2,3 | 390 | 29,9 | 0,4 | 0,4 |

## Patentansprüche

1. Öl-in-Wasser-Emulsion, in der die Ölphase zu wenigstens 95 Gew.-% aus den folgenden Bestandteilen besteht:
a) 50 bis 80 Gew.-% bezogen auf das Gesamtgewicht der Ölphase wenigstens eines Alkanols mit wenigstens 16 C-Atomen als Komponente A, wobei der Anteil an Alkanolen mit 16 bis 18 C-Atomen wenigstens 80 Gew.-% bezogen auf die Gesamtmenge der Komponente A ausmacht,
b) 1 bis 10 Gew.-% bezogen auf das Gesamtgewicht der Ölphase wenigstens einer weiteren Komponente B, die unter Estern von C₁₂-C₃₆-Alkancarbonsäuren mit Polyglycerin und Estern von C₁₂-C₃₆-Alkancarbonsäuren mit C₁₂-C₃₆-Alkanolen sowie deren Gemischen ausgewählt ist,
c) 10 bis 49 Gew.-% bezogen auf das Gesamtgewicht der Ölphase wenigstens einer weiteren Komponente C, welche ausgewählt ist unter organischen Substanzen, die bei 50 °C und 1013 mbar flüssig sind, bei Normaldruck einen Siedepunkt oberhalb 200 °C aufweisen sowie bei 25 °C und 1013 mbar eine Löslichkeit in Wasser von weniger als 0,1 g/l aufweisen.

2. Öl-in-Wasser-Emulsion nach Anspruch 1, worin die Komponente A im Wesentlichen aus unverzweigten Alkanolen besteht.

3. Öl-in-Wasser-Emulsion nach einem der Ansprüche 1 bis 2, worin die Komponente A zu wenigstens 80 Gew-% aus wenigstens einem Alkanol besteht, das unter Palmitylalkohol und Stearylalkohol und deren Mischungen ausgewählt ist.

4. Öl-in-Wasser-Emulsion nach einem der Ansprüche 1 bis 3, worin die Komponente B zu wenigstens 80 Gew-% ausgewählt ist unter den Estern wenigstens einer C₁₈-C₂₄-Alkancarbonsäure mit Polyglycerin.

5. Öl-in-Wasser-Emulsion nach Anspruch 4, worin der Polyglycerinester durch Veresterung von Polyglycerin mit Behensäure erhalten wurde.

6. Öl-in-Wasser-Emulsion nach einem der Ansprüche 1 bis 5, worin der Bestandteil C zu wenigstens 80 Gew-% aus aliphatischen Kohlenwasserstoffölen besteht.

7. Öl-in-Wasser-Emulsion nach einem der vorhergehenden Ansprüche, in der der Feststoffgehalt der Emulsion in einem Bereich von 10 bis 50 % liegt.

8. Öl-in-Wasser-Emulsion nach einem der vorhergehenden Ansprüche, deren gewichtsmittlere Teilchengröße in einem Bereich von 0,5 bis 10 µm liegt.

9. Verwendung der Öl-in-Wasser-Emulsion nach einem der vorhergehenden Ansprüche als Entschäumer oder Entlüfter in wässrigen Zusammensetzungen.

10. Verwendung der Öl-in-Wasser-Emulsion nach Anspruch 9 als Entlüfter für wässrige Papierstoffsuspensionen.

11. Verwendung der Öl-in-Wasser-Emulsion nach Anspruch 10 als Entlüfter im Stoffauflauf der Papierherstellung.

12. Verwendung der Öl-in-Wasser-Emulsion nach Anspruch 8 bis 11 bei Temperaturen im Bereich von 20 bis 50 °C.

## Claims

1. An oil-in-water emulsion in which the oil phase consists to at least 95% by weight of the following constituents:
a) 50 to 80% by weight, based on the total weight of the oil phase, of at least one alkanol having at least 16 carbon atoms as component A, where the fraction of alkanols having 16 to 18 carbon atoms constitutes at least 80% by weight, based on the total amount of component A,
b) 1 to 10% by weight, based on the total weight of the oil phase, of at least one further component B, which is selected from esters of C₁₂-C₃₆-alkanecarboxylic acids with polyglycerol and esters of C₁₂-C₃₆-alkanecarboxylic acids with C₁₂-C₃₆-alkanols, and mixtures thereof,
c) 10 to 49% by weight, based on the total weight of the oil phase, of at least one further component C, which is selected from organic substances which are liquid at 50°C and 1013 mbar, at atmospheric pressure have a boiling point above 200°C, and at 25°C and 1013 mbar have a solubility in water of less than 0.1 g/l.

2. The oil-in-water emulsion according to claim 1, in which the component A consists essentially of unbranched alkanols.

3. The oil-in-water emulsion according to either of claims 1 and 2, in which the component A consists to at least 80% by weight of at least one alkanol which is selected from palmityl alcohol and stearyl alcohol and mixtures thereof.

4. The oil-in-water emulsion according to any one of claims 1 to 3, in which the component B is selected to at least 80% by weight from the esters of at least one C₁₈-C₂₄-alkanecarboxylic acid with polyglycerol.

5. The oil-in-water emulsion according to claim 4, in which the polyglycerol ester has been obtained by esterification of polyglycerol with behenic acid.

6. The oil-in-water emulsion according to any one of claims 1 to 5, in which the constituent C consists to at least 80% by weight of aliphatic hydrocarbon oils.

7. The oil-in-water emulsion according to any one of the preceding claims, in which the solids content of the emulsion is in a range from 10 to 50%.

8. The oil-in-water emulsion according to any one of the preceding claims, the weight-average particle size of which is in a range from 0.5 to 10 µm.

9. The use of the oil-in-water emulsion according to any one of the preceding claims as antifoam or deaerator in aqueous compositions.

10. The use of the oil-in-water emulsion according to claim 9 as deaerator for aqueous paper stock suspensions.

11. The use of the oil-in-water emulsion according to claim 10 as deaerator in the headbox of papermaking.

12. The use of the oil-in-water emulsion according to claims 8 to 11 at temperatures in the range from 20 to 50°C.

## Revendications

1. Emulsion huile-dans-eau dans laquelle la phase huileuse est constituée à raison d'au moins 95% en poids des constituants suivants :
a) 50 à 80% en poids, par rapport au poids total de la phase huileuse, d'au moins un alcanol comprenant au moins 16 atomes de carbone comme composant A, la proportion d'alcanols comprenant 16 à 18 atomes de carbone représentant au moins 80% en poids par rapport à la quantité totale du composant A,
b) 1 à 10% en poids, par rapport au poids total de la phase huileuse, d'au moins un autre composant B, qui est choisi parmi les esters d'acides C₁₂-C₃₆-alcanecarboxyliques avec du polyglycérol et les esters d'acides C₁₂-C₃₆-alcanecarboxyliques avec des C₁₂-C₃₆-alcanols ainsi que leurs mélanges,
c) 10 à 49% en poids, par rapport au poids total de la phase huileuse, d'au moins un autre composant C, qui est choisi parmi les substances organiques qui sont liquides à 50°C et à 1013 mbars, qui présentent, à la pression normale, un point d'ébullition supérieur à 200°C et qui présentent, à 25°C et à 1013 mbars, une solubilité dans l'eau de moins de 0,1 g/l.

2. Emulsion huile-dans-eau selon la revendication 1, dans laquelle le composant A est essentiellement constitué d'alcanols non ramifiés et leurs mélanges.

3. Emulsion huile-dans-eau selon l'une quelconque des revendications 1 à 2, dans laquelle le composant A est constitué à raison d'au moins 80% en poids d'au moins un alcanol qui est choisi parmi l'alcool palmitique et l'alcool stéarylique.

4. Emulsion huile-dans-eau selon l'une quelconque des revendications 1 à 3, dans laquelle le composant B est choisi à raison d'au moins 80% en poids parmi les esters d'au moins un acide C₁₈-C₂₄-alcanecarboxylique avec du polyglycérol.

5. Emulsion huile-dans-eau selon la revendication 4, dans laquelle l'ester de glycérol a été obtenu par estérification de polyglycérol avec de l'acide béhénique.

6. Emulsion huile-dans-eau selon l'une quelconque des revendications 1 à 5, dans laquelle le constituant C est constitué à raison d'au moins 80% en poids d'huiles hydrocarbonées aliphatiques.

7. Emulsion huile-dans-eau selon l'une quelconque des revendications précédentes, dans laquelle la teneur en solides de l'émulsion se situe dans une plage de 10 à 50%.

8. Emulsion huile-dans-eau selon l'une quelconque des revendications précédentes, dont la grosseur pondérale moyenne des particules se situe dans une plage de 0,5 à 10 µm.

9. Utilisation de l'émulsion huile-dans-eau selon l'une quelconque des revendications précédentes comme antimousse ou agent de désaération dans des compositions aqueuses.

10. Utilisation de l'émulsion huile-dans-eau selon la revendication 9 comme agent de désaération pour des suspensions aqueuses de pâte à papier.

11. Utilisation de l'émulsion huile-dans-eau selon la revendication 10 comme agent de désaération dans le mécanisme distributeur de la production de papier.

12. Utilisation de l'émulsion huile-dans-eau selon la revendication 8 à 11 à des températures dans la plage de 20 à 50°C.
